# EUROPEAN PATENT APPLICATION

(11) **EP 3 560 662 A1**
(43) Date of publication of application: **30.10.2019**
(21) Application number: 18168793.0
(22) Date of filing: 23.04.2018
(51) Int. Cl.: B25J 9/16, B25J 19/02

(54) **ROBOTIC MANIPULATOR SYSTEM**

(71) Applicant: Siemens Aktiengesellschaft, 80333 München (DE)
(72) Inventor: Meyer-Delius Di Vasto, Daniel, 81541 München (DE)

(57) **Abstract**

In order to cast visible information onto a working space (WS) of a Robotic Manipulator (RMS, RMS') without any mutual obstruction of neither the visible casting of information nor the Robotic Manipulator System operation it is proposed to attach either a projector (PJ) or a projector (PJ) and a camera (CM) near, in the vicinity, proximity of an end-effector (EEF) onto a free end side (FRE), at a wrist (WR), of the Robotic Manipulator System (RMS, RMS'). In this way, the projector/camera can be moved by a robotic arm (AR) either to cast optical (e.g. in the form of light, pictures or videos), graphical or text information onto different surfaces (CSF, SSF, GSF) of a environment of the work space (WS) or to record pictures, videos or other information from the work space environment to perform a given task, e.g. at least one of a visual inspection of surfaces in the environment of the work space (WS) and enabling/supporting an assembly in collaboration with a human worker in the environment of the work space (WS) .

## Description

The invention refers to a Robotic Manipulator System according to the preamble of claim 1.

A Robotic Manipulator System, in the technical literature also called as robotic manipulator or manipulator, is constructed using rigid links connected by joints with one fixed end and one free end to perform a given task within a work space or work space environment. The joints of the robotic manipulator could be linear-movable and/or rotational-movable components, which enables relative motion between the adjoining and/or adjacent links. The manipulator can be divided into two parts, arm and body as a first part and a wrist with an end-effector as a second part. The arm and body contain linear-movable and/or rotational-movable joints connected together by rigid links to move and place objects or tools within the work space, whereas the wrist contains at least two compact, in particular rotational-movable, joints including the end-effector to interact with the work space environment.

In connection with Robotic Manipulator Systems sometimes projectors, such as video- or laser projectors, statically mounted outside the Robotic Manipulator Systems are used to cast information onto the working surface of the robotic manipulators. The problem with this approach is that the surface onto which the information can be cast can only be changed manually by repositioning the projector.

Furthermore the projection can be obstructed by the robotic manipulator moving between the projector and the projection surface.

In [1] and [2] fixed projectors are mounted over a Robotic Manipulator System is used to cast task-relevant information onto a surface of the work space or work space environment.

Furthermore, in [1] a human-machine interaction concept based on augmented reality is described. The collaborative human-machine assembly use-case described in [1] may be considered as the starting point of considerations for the present invention.

It is an object of the invention to propose a Robotic Manipulator System, which casts visible information onto a working space of the Robotic Manipulator System without any mutual obstruction of neither the visible casting of information nor the Robotic Manipulator System operation.

This object is solved based on a Robotic Manipulator System defined in the preamble of claim 1 by the features in the characterizing part of claim 1.

The underlying idea of the invention according to the claim 1 is in attaching either a projector or a projector and a camera near, in the vicinity, proximity of an end-effector onto a free end side, at a wrist, of the Robotic Manipulator System. In this way, the projector/camera can be moved by a robotic arm either to cast optical (e.g. in the form of light, pictures or videos), graphical or text information onto different surfaces of a work space environment or to record pictures, videos or other information from the work space environment to perform a given task, e.g. at least one of a visual inspection of surfaces in the environment of the work space and enabling/supporting an assembly in collaboration with a human worker in the environment of the work space.

Compared to a statically mounted projector, where the surface of the work space environment onto which the information can be casted cannot be changed, the projector attached to the Robotic Manipulator System makes it possible to cast information onto a larger number of surfaces of the work space environment. Furthermore, by attaching the projector near the end-effector, the situations where the Robotic Manipulator System obstructs the projection are greatly reduced. Corresponding advantages against a statically mounted camera can be stated with regard to the camera attached to the Robotic Manipulator System.

Being able to actively cast information onto different surfaces of the work space environment or record information from the work space environment can be used to provide direct feedback to the system user, and thus reduce the effort and complexity associated to the commissioning, programming and operation of the Robotic Manipulator System. In addition, being able to programmatically cast or record the information enables new approaches for engineering and operating this Robotic Manipulator System.

According to a preferred advantageous development of the invention the projector respectively the camera are attached via a simple and regarding operation and handling user-friendly fixture.

An alternative approach for increasing the surfaces of the work space environment that can be used for displaying information would be to use multiple projectors/cameras installed at different positions (e.g. overhead, on the sides, etc.). This would not only increase the number and area of usable surfaces of the work space environment, but could also mitigate the effects of the Robotic Manipulator System obstructing the projection/recording on surfaces that are within the range of more than one projector/camera. The number and area of usable surfaces is, however, still given by the fixed position of the projector/camera.

The problem of the Robotic Manipulator System obstructing the projection onto/recording from the surface of the work space environment can be solved using a translucent material for the surface and installing the projector/camera underneath.

Moreover advantageous further developments of the invention arise out of the following description of preferred embodiments of the invention according to the FIGURES 1 to 5. They show:
FIGURE 1 as a first embodiment a Robotic Manipulator System equipped with a projector directed to a ground surface of a work space;
FIGURE 2 in modification to the FIGURE 1 the Robotic Manipulator System equipped with the projector directed to a side surface of the work space;
FIGURE 3 as a second embodiment a Robotic Manipulator System equipped with a projector and a camera both directed to a ceiling surface of a work space;
FIGURE 4 in modification to the FIGURE 3 the Robotic Manipulator System equipped with both the projector and the camera directed to a side surface of the work space;
FIGURE 5 in modification to the FIGURE 3 the Robotic Manipulator System equipped with both, the projector and the camera directed to a ground surface of the work space, and a gripper;

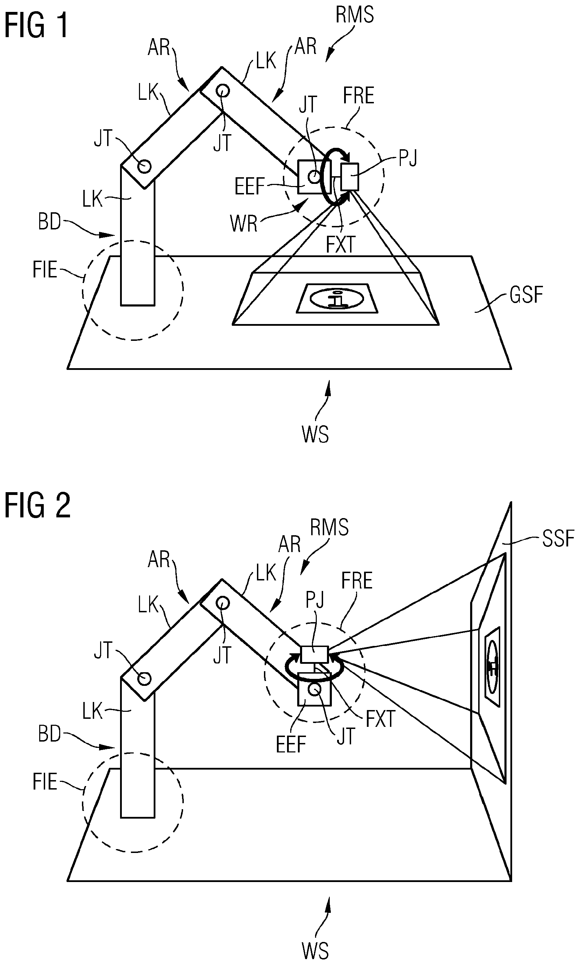

FIGURE 1 depicts according to a first embodiment a Robotic Manipulator System RMS, which is used in the environment of a work space WS. The Robotic Manipulator System RMS has one fixed end FIE and one free end FRE to perform a given task within the work space WS, e.g. enabling/supporting a visual inspection of surfaces in the environment of the work space WS. According to the FIGURE 1 this surface is a ground surface GSF.

The Robotic Manipulator System RMS comprise a body BD on the fixed end side FIE and a wrist WR on the free end side FRE. Both, the body BD and the wrist WR, are connected by an arm AR. The body BD and the arm AR comprise linear-movable and/or rotational-movable joints JT connected together by rigid links LK to move and place objects or tools within the work space WS, while the wrist WR comprises at least two compact, in particular rotational-movable, joints JT_{WR} including an end-effector EEF to interact with the environment of the work space WS.

The Robotic Manipulator System RMS contains further to perform the cited task, e.g. enabling/supporting the visual inspection of surfaces in the environment of the work space WS, a projector PJ being attached near, in the vicinity, of the end-effector EEF. Attaching according to the depicted first embodiment in the FIGURE 1 thereby means that a simple and regarding operation and handling user-friendly fixture FXT is used to connect, in particular removably, the projector PJ with the Robotic Manipulator System RMS.

FIGURE 2 depicts in modification to the FIGURE 1 the Robotic Manipulator System RMS equipped with the projector PJ directed to a side surface SSF of the work space WS. The Robotic Manipulator System RMS has again the fixed end FIE and the free end FRE to perform a given task within the work space WS, e.g. enabling/supporting the visual inspection of surfaces in the environment of the work space WS, which is now the side surface SSF.

The Robotic Manipulator System RMS comprise again the body BD on the fixed end side FIE and the wrist WR on the free end side FRE. Both, the body BD and the wrist WR, are connected again by the arm AR. The body BD and the arm AR comprise again the linear-movable and/or rotational-movable joints JT connected together by the rigid links LK to move and place objects or tools within the work space WS, while the wrist WR comprises again the at least two compact, in particular rotational-movable, joints JT_{WR} including the end-effector EEF to interact with the environment of the work space WS.

Moreover again the Robotic Manipulator System RMS contains to perform the cited task, e.g. enabling/supporting the visual inspection of surfaces in the environment of the work space WS, the projector PJ being attached near, in the vicinity, of the end-effector EEF. Also here, attaching means that the simple and regarding operation and handling user-friendly fixture FXT is used to connect, in particular removably, the projector PJ with the Robotic Manipulator System RMS.

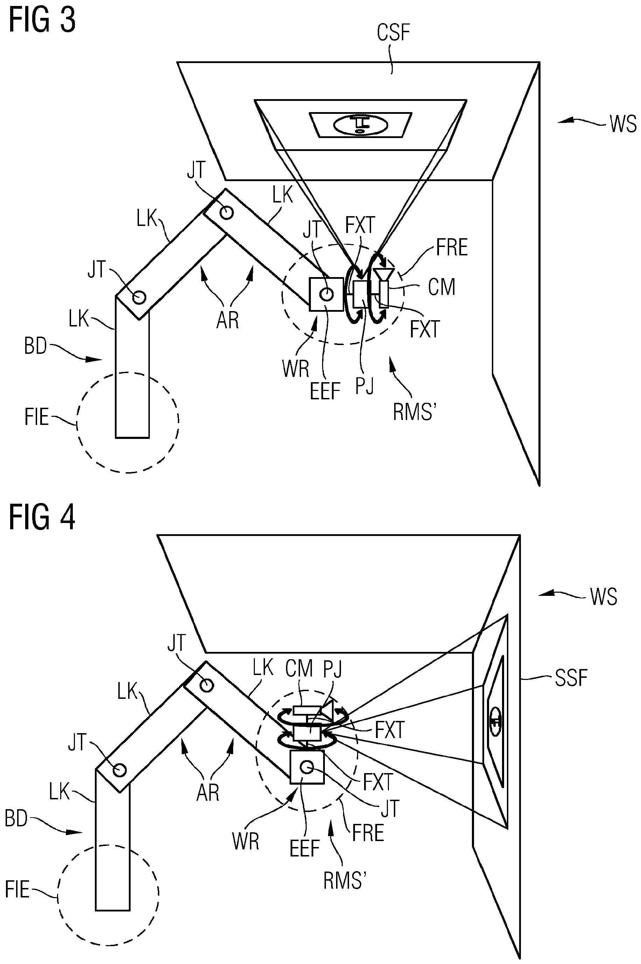

FIGURES 3 and 4 depict each according to a second embodiment a further Robotic Manipulator System RMS', which is used in the environment of the work space WS. The Robotic Manipulator System RMS' has also the fixed end FIE and the free end FRE to perform a given task within the work space WS, e.g. at least one of the visual inspection of surfaces in the environment of the work space WS and enabling/supporting an assembly in collaboration with a human worker in the environment of the work space WS. According to the FIGURE 3 this surface is a ceiling surface CSF, whereas with reference to FIGUR 4 this surface is a side surface SSF.

The Robotic Manipulator System RMS' comprises also the body BD on the fixed end side FIE and the wrist WR on the free end side FRE. Both, the body BD and the wrist WR, are connected also by the arm AR. The body BD and the arm AR comprise also the linear-movable and/or rotational-movable joints JT connected together also by rigid links LK to move and place objects or tools within the work space WS, while the wrist WR comprises also the least two compact, in particular rotational-movable, joints JT_{WR} including the end-effector EEF to interact with the environment of the work space WS.

The Robotic Manipulator System RMS' contains now in addition and in difference to the first embodiment to perform the cited task, e.g. at least one of the visual inspection of surfaces in the environment of the work space WS and enabling/supporting the assembly in collaboration with a human worker in the environment of the work space WS, a projector PJ and a camera CM being both attached near, in the vicinity, of the end-effector EEF. Attaching according to the depicted second embodiment in the FIGURES 3 and 4 thereby also means that, but now for both, the projector PJ and the camera CM, the simple and regarding operation and handling user-friendly fixture FXT is used each to connect, in particular removably, the projector PJ and the camera CM with the Robotic Manipulator System RMS'.

For the visual inspection according to the FIGURE 3 the arm AR with the projector PJ and the camera CM attached near the end-effector EEF is moved such that the ceiling surface CSF to be inspected is in focus of both, the camera CM and the projector PJ.

In this focused position the projector PJ can cast for instance white light onto the ceiling surface CSF in order to increase the accuracy and robustness of the camera-based visual inspection process.

In case of an anomaly being detected, a mark, e.g. a red circle, can be projected precisely over the anomaly for the operator to take further action.

For inspecting a different surface (cf. FIGURE 4) the arm AR is moved so that another surface to be inspected is in focus of both, the camera CM and the projector PJ.

For calibrating the camera CM, a calibration pattern can be projected onto the surface. The robotic arm is the automatically moved while the projected pattern remains fixed. This eliminates the need of an external calibration pattern within the work space of the Robotic Manipulator System RMS'.

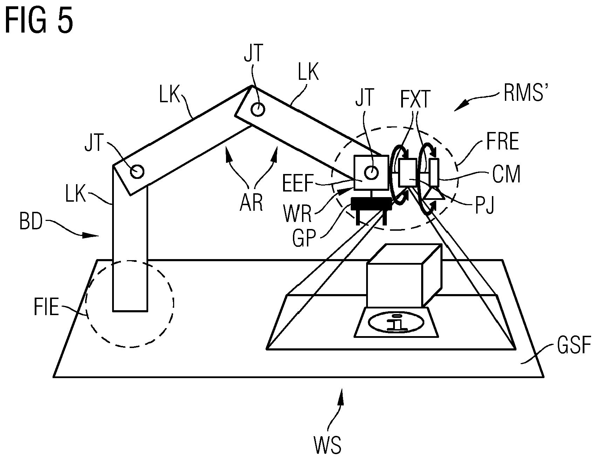

FIGURE 5 depicts in modification to the FIGURES 3 and 4 the further Robotic Manipulator System RMS' equipped besides the projector PJ and the camera CM with a gripper GP for handling objects. All these equipped components are directed to a ground surface GSF of the work space WS. The Robotic Manipulator System RMS has again the fixed end FIE and the free end FRE to perform a given task within the work space WS, e.g. realizing an assembly in collaboration with a human worker in the environment of the work space WS, which is now the ground surface GSF.

The Robotic Manipulator System RMS' comprises again the body BD on the fixed end side FIE and the wrist WR on the free end side FRE. Both, the body BD and the wrist WR, are connected again by the arm AR. The body BD and the arm AR comprise again the linear-movable and/or rotational-movable joints JT connected together again by rigid links LK to move and place objects or tools within the work space WS, while the wrist WR comprises again the least two compact, in particular rotational-movable, joints JT_{WR} including the end-effector EEF to interact with the environment of the work space WS.

The Robotic Manipulator System RMS' contains now in addition to the projector PF and the camera CM the gripper GP to perform the cited task, e.g. realizing the assembly in collaboration with a human worker in the environment of the work space WS. The gripper GP has its normal, well-known attaching position on the end-effector EEF.

For handling the objects and realizing the assembly in collaboration with a human worker in the environment of the work space WS according to the FIGURE 5 the arm AR is moved such that the object, e.g. a work piece, to be manipulated (e.g. picked) is in focus of both, the camera CM and the projector PJ.

In this focused position the projector PJ can cast again for instance white light onto the work piece in order to increase the accuracy and robustness of the camera-based object detection process.

The result of the object detection process can be projected precisely onto the work piece, providing in this way direct feedback to the human worker:
- Highlight the work piece that is to be manipulated. The human worker then knows the intended action of the Robotic Manipulator System RMS'. This is especially relevant in case that multiple work pieces could be considered for manipulation at some point in the process.
- In a collaborative setup, projecting information precisely over the work piece can be used to communicate to the human worker the step or action that the worker has to perform. For example, indicating the precise location for the next screw that the worker needs to screw or the work piece that needs to be picked as next.
- This kind of feedback can be used to assess the accuracy of the object detection process. For example, if the projected feedback is not correctly centered on the work piece or correspond to a different type of work piece.
- For programming the task, the field of view of the camera CM can be cast by the projector PJ. In this way, the programmer needs only to move the arm AR to the position where, for example, the work piece is completely within the field of view of the camera CM. Without the direct feedback from the projector PJ, the programmer would probably need several attempts before finding an adequate position for the arm AR.

### REFERENCES:

[1] Bernd Kast: "Augmentierung realer Arbeitsräume mit hand-lungsrelevanter Information fur die intuitive Mensch-Roboter-Zusammenarbeit". Master's thesis, Technische Universität Munchen, 2015
[2] Frank Wallhoff, Jurgen Blume, Alexander Bannat, Wolfgang Rösel, Claus Lenz, and Alois Knoll: "A skill-based approach towards hybrid assembly". Advanced Engineering Informatics, 24 (3) :329{339, 2010

## Claims

1. Robotic Manipulator System (RMS, RMS') with one fixed end (FIE) and one free end (FRE) to perform a given task within a work space (WS) and being divided into a body (BD) on the fixed end side, a wrist (WR) on the free end side and an arm (AR) in between, in which the body (BD) and the arm (AR) contain linear-movable and/or rotational-movable joints (JT) connected together by rigid links (LK) to move and place objects or tools within the work space (WS) and the wrist (WR) contains at least two compact, in particular rotational-movable, joints (JT_{WR}) including an end-effector (EEF) to interact with the work space environment,
**characterized by**
either a projector (PJ) or a projector (PJ) and a camera (CM) being attached each in the vicinity of the end-effector (EEF) .

2. Robotic Manipulator System (RMS, RMS') according to claim 1, wherein
the projector (PJ) and the camera (CM) are attached via a simple and regarding operation and handling user-friendly fixture.
